# EUROPÄISCHE PATENTSCHRIFT

(11) **EP 3 029 333 B1**
(45) Veröffentlichungstag und Bekanntmachung des Hinweises auf die Patenterteilung: **18.04.2018**
(21) Anmeldenummer: 15189337.7
(22) Anmeldetag: 12.10.2015
(51) Int. Cl.: F04D 29/08, F04D 29/42, F16J 15/06, F04D 1/06, F04D 29/62

(54) **AXIAL GETEILTE PUMPE**
AXIALLY SPLIT PUMP
POMPE A SEPARATION AXIALE

(30) Priorität: 05.12.2014 EP 14196439
(43) Veröffentlichungstag der Anmeldung: 08.06.2016
(73) Patentinhaber: Sulzer Management AG, 8401 Winterthur (CH)
(72) Erfinder: Welschinger, Thomas, 78315 Radolfzell (DE); Tischler, Heike, 8406 Winterthur (CH); Vogel, Berthold, 71701 Schwieberdingen (DE)
(74) Vertreter: Intellectual Property Services GmbH

(56) Entgegenhaltungen:
- EP-A1- 2 636 905
- WO-A1-2014/083374
- WO-A1-2014/095787
- JP-U- S6 375 665
- JP-Y2- S6 224 079

## Beschreibung

Die Erfindung betrifft eine axial geteilte Pumpe zum Fördern eines Fluids gemäss dem Oberbegriff des unabhängigen Patentanspruchs.

Axial geteilte Pumpen, die auch als horizontal geteilte Pumpen bezeichnet werden, sind Pumpen, bei denen das Gehäuse parallel zur Achse der Welle geteilt ist und somit ein Unterteil und einen Deckel aufweist. Sowohl das Unterteil als auch der Deckel weisen jeweils einen Flansch auf, die zur Montage der Pumpe aufeinandergelegt und dann fest miteinander verbunden, beispielsweise verschraubt, werden.

Axial geteilte Pumpen sind seit langem wohl bekannt und werden in zahlreichen Ausführungsformen meist als Zentrifugalpumpen hergestellt, beispielsweise als ein- oder doppelflutige Pumpen und als einstufige oder mehrstufige Pumpen. Dabei kann das Laufrad der Pumpe zwischen zwei Lagern angeordnet sein (Between-bearing-Pump). Auch der Anwendungsbereich dieser Pumpen ist sehr breit, sie werden zum Beispiel in der Öl- und Gasindustrie oder in der Wasserindustrie oder im Bereich der Energieerzeugung eingesetzt. Häufig sind axial geteilte Pumpen für einen hohen Betriebsdruck oder grosse Volumenströme ausgelegt und eignen sich zum Pumpen über grosse geodätische Höhen, zum Fördern durch Wasser- oder Ölpipelines oder zur Meerwasserentsalzung mittels Umkehrosmose.

Bei axial geteilten Pumpen kommt natürlich der Abdichtung zwischen dem Unterteil und dem Deckel des Gehäuses entlang der beiden Flansche eine entscheidende Bedeutung zu. Hierbei gilt es zum einen, den Innenraum der Pumpe gegen die Umgebung abzudichten und zum anderen im Innenraum der Pumpe solche Druckräume gegeneinander abzudichten, in denen im Betriebszustand unterschiedliche Drücke herrschen, wie dies beispielsweise bei mehrstufigen Pumpen der Fall ist.

Zum Dichten zwischen dem Unterteil und dem Deckel ist es bekannt, insbesondere für Anwendungen mit hohem Druck, eine Flachdichtung zwischen den beiden Flanschen einzulegen, sodass sich die beiden Flansche im montierten Zustand nicht direkt berühren, sondern beidseitig die Flachdichtung kontaktieren. Solche Flachdichtungen erfordern eine hohe Vorspannung, insbesondere auch, um die erforderliche Flächenpressung zwischen Unterteil, Deckel und der Flachdichtung zu erzielen.

Eine alternative Technologie zur Abdichtung zwischen dem Unterteil und dem Deckel, wie sie beispielsweise auch in der WO-A-2014/083374 beschrieben ist, besteht darin, die Flansche des Unterteils und des Oberteils ohne dazwischenliegende Dichtung direkt aufeinander zu montieren. Die jeweiligen Oberflächen der beiden Flansche bilden dann Dichtflächen, die im montierten Zustand direkten Kontakt miteinander haben. Bei dieser Lösung ist üblicherweise in dem Unterteil oder in dem Deckel oder im Unterteil und im Deckel zumindest eine Dichtungsnut vorgesehen, die sich beidseitig der Welle über die gesamte axiale Länge der Pumpe erstreckt und in die ein schnurförmiges Dichtungselement, beispielsweise ein O-ring-ähnliches Dichtungselement eingelegt ist. Nach Einlegen des schnurförmigen Dichtungselements in die Dichtungsnut werden das Unterteil und der Deckel fest miteinander verschraubt, sodass die Dichtflächen der beiden Flansche in direktem Kontakt miteinander stehen und das schnurförmige Dichtungselement in der Dichtungsnut elastisch verformt wird, um so eine zuverlässige Abdichtung zu gewährleisten.

Da bei dieser Lösung keine Flachdichtung zwischen dem Flansch des Unterteils und dem des Deckels eingelegt ist, haben die Verschraubungen, mit denen das Unterteil und der Deckel aneinander befestigt werden, eine deutlich geringere Last zu tragen. Hieraus resultieren einige Vorteile: So können die Flansche, welche die Dichtflächen bilden, deutlich dünner und schmaler ausgestaltet werden, es wird weniger Material für die Flansche benötigt, was eine Kosten- und eine Gewichtsersparnis mit sich bringt, für die Verschraubung von Unterteil und Deckel können kleinere Schrauben bzw. Bolzen verwendet werden, diese können daher auch näher an der hydraulischen Kontur platziert werden. Zudem lässt die Verwendung der schnurförmigen Dichtungselemente im Vergleich zu den Flachdichtungen eine höhere Deformation des Gehäuses zu. Dies ist insbesondere bei mehrstufigen Pumpen von Vorteil, weil sich hierdurch die Leckage zwischen verschiedenen Druckräumen in der Pumpe, in welchen unterschiedliche Drücke herrschen, deutlich reduzieren oder sogar vermeiden lässt.

Die Dichtungselemente sind üblicherweise aus einem Elastomer gefertigt, wie es auch für handelsübliche O-Ringdichtungen verwendet wird, beispielsweise aus dem Nitrilkautschuk Nitril-Butadien-Kautschuk (NBR: Nitrile Butadiene Rubber).

Bei den meisten Anwendungen sind mehr als eine Dichtungsnut mit jeweils einem eingelegten schnurförmigen oder einem ringförmigen Dichtungselement vorgesehen. So kann beispielsweise ein inneres schnurförmiges Dichtungselement zur Abdichtung des Saugraums gegen den Druckraum vorgesehen sein und ein äusseres schnurförmiges Dichtungselement, welches den Innenraum der Pumpe gegen die Aussenwelt, also den Umgebungsdruck abdichtet. Inbesondere bei mehrstufigen Pumpen können zusätzliche Dichtungsnuten mit jeweils eingelegten schnurförmigen Elementen vorgesehen sein, um die verschiedenen Druckräume, in denen im Betriebszustand unterschiedliche Drücke herrschen, gegeneinander abzudichten.

Bei der Auslegung solcher Dichtungen mittels schnurförmiger Dichtungselemente ist man bemüht, die individuellen Dichtungselemente möglichst als geschlossene also insbesondere ringförmige Dichtungselemente zu gestalten, weil die Verbindungs- oder Stossstellen zwischen individuellen Dichtungselementen potenziell zu Leckagen führen können, insbesondere dann, wenn die Pumpe für einen hohen Betriebsdruck von beispielsweise bis zu 100 bar ausgelegt ist. Allerdings ist es rein konstruktiv nicht möglich, ausschliesslich in sich geschlossene Dichtungselemente vorzusehen. Es wird immer solche kritischen Stellen geben, an denen zwei individuelle Dichtungselemente aneinander grenzen oder verbunden werden müssen und für die erwünschte Abdichtung zusammenwirken müssen.

Eine solche kritische Stelle ist die Verbindung zwischen dem Gehäuse der Pumpe und den Seitendeckeln der Pumpe, eine Stelle, an der insgesamt drei Bauteile aneinander grenzen, nämlich das Unterteil des Gehäuses, der Deckel des Gehäuses und der Seitendeckel. An dieser kritischen Stelle muss die Pumpe gegen die Umgebung bzw. den Umgebungsdruck abgedichtet werden. Hier auftretende Leckagen führen nicht nur zu einer Reduzierung der Effizienz der Pumpe, sondern können je nach dem von der Pumpe geförderten Fluid auch zu Umweltbelastungen durch austretendes Fluid führen, beispielsweise bei Flüssigkeiten wie Erdöl oder Rohöl.

Eine andere kritische Stelle ist die Verbindung bzw. der Kontakt des äusseren Dichtungselements, welches der Abdichtung gegen die Umgebung der Pumpe dient, mit solchen Dichtungselementen, die im Inneren der Pumpe Druckräume gegeneinander abgrenzen, in denen im Betriebszustand unterschiedliche Drücke herrschen. So muss beispielsweise bei einer mehrstufigen Pumpe ein inneres Dichtungselement, welches der Abdichtung zwischen zwei Stufen dient, mit dem äusseren Dichtungselement verbunden bzw. in Kontakt gebracht werden. Diese Verbindung muss zuverlässig sein und sollte im Falle von Wartungsarbeiten ohne grossen Aufwand oder Spezialwerkzeuge reparabel sein.

Desweiteren befasst sich die JP S62 24079 Y2 speziell mit der Abdichtung des Seitendeckels in einer axial geteilten Pumpe. Hier ist es die wesentliche Idee, in die Kontaktflächen des oberen und des unteren Gehäuseteils, welche im zusammengebauten Zustand den Seitendeckel berühren, zwei halbkreisförmige Dichtungen einzulegen, die jedoch jeweils kurz vor dem Erreichen der Kontaktfläche zwischen dem oberen Gehäuseteil und dem unteren Gehäuseteil enden, sich also auch im zusammengesetzten Zustand nicht berühren. Im Seitendeckel ist ein zusätzliches Dichtungselement vorgesehen, welches den Bereich überdeckt, der von den Dichtungselementen nicht abgedeckt wird. Bei der Lösung gemäss JP S62 24079 Y2 ist ein direkter Kontakt zwischen den halbkreisförmigen Dichtungen, welche die Seitendeckel abdichten, mit dem Dichtungselement, das zwischen den beiden Gehäuseteilen abdichtet, nicht vorhanden ist.

Ausserdem ist aus der EP 2 636 905 A1 eine Dichtungsanordnung zur Anordnung zwischen zwei Bauteilen, die eine plane Kontaktfläche aufweisen, bekannt. Die beiden Bauteile sind als Gehäuseteile eines längs geteilten Gehäuses einer Pumpe ausgeführt. Zur Abdichtung wird ein langgestrecktes, flexibles Dichtelement in Form einer Dichtungsschnur mit einem Endbereich in einer Nut der Kontaktfläche angeordnet. Die Dichtungsschnur ist an ihrem Endbereich in einem gekrümmten Abschlusselement geführt, wobei die Dichtungsschnur und das Abschlusselement derart ausgeführt sind, dass sie im Endbereich der Dichtungsschnur einen Überlappungsbereich aufweisen und damit eine durchgängige Dichtkante bilden.

Ausgehend von dem beschriebenen Stand der Technik ist es daher eine Aufgabe der Erfindung eine axial geteilte Pumpe zum Fördern eines Fluids vorzuschlagen, bei der auch an Verbindungsstellen zwischen Dichtungselementen für alle Betriebszustände und insbesondere auch im Langzeitbetrieb der Pumpe eine zuverlässige Abdichtung gewährleistet werden kann.

Der diese Aufgabe lösenden Gegenstand der Erfindung ist durch die Merkmale des unabhängigen Patentanspruchs gekennzeichnet.

Erfindungsgemäss wird also eine axial geteilte Pumpe zum Fördern eines Fluids vorgeschlagen, mit einem axial geteilten Gehäuse, welches ein Unterteil und einen Deckel umfasst, wobei das Unterteil eine erste Dichtfläche aufweist und der Deckel eine zweite Dichtfläche, wobei das Unterteil und der Deckel derart aneinander befestigbar sind, dass die beiden Dichtflächen direkten Kontakt miteinander haben, wobei in den Dichtflächen mindestens eine erste Dichtungsnut zur Aufnahme eines ersten Dichtungselements vorgesehen ist, und wobei mindestens eine zweite Dichtungsnut zur Aufnahme eines zweiten Dichtungselements vorgesehen ist, wobei die erste Dichtungsnut und die zweite Dichtungsnut durch einen Verbindungsbereich miteinander verbunden sind, und wobei im Verbindungsbereich ein elastisches Vorspannelement vorgesehen ist, welches eine Vorspannung auf eines der beiden Dichtungselemente ausübt. Dieses Vorspannelement ist als Feder ausgestaltet. Vorzugsweise ist dabei in die erste Dichtungsnut ein erstes Dichtungselement eingelegt und in die zweite Dichtungsnut ist ein zweites Dichtungselement eingelegt.

Durch das Vorsehen des Vorspannelements im Verbindungsbereich zwischen den beiden Dichtungsnuten wird zumindest auf eines der Dichtungselemente eine Vorspannung erzeugt, welches für alle Betriebszustände einen sicheren und dichtenden Kontakt des Dichtungselements, beispielsweise mit der Wandung der Dichtungsnut, in welche das Dichtungselement eingelegt ist, gewährleistet. Die Vorspannung ist dabei bevorzugt so gerichtet, dass sie das Dichtungselement in Richtung des abnehmenden Drucks vorspannt. Durch das Vorspannelement lässt sich insbesondere im Verbindungsbereich zwischen zwei Dichtungselementen eine besonders gute und zuverlässige Abdichtung realisieren.

Das Vorspannelement bietet ferner den Vorteil, dass auch schon bei kleineren Betriebsdrücken, also beispielsweise beim Anfahren der Pumpe, von Beginn an eine sehr gute Dichtwirkung erzielt wird. Ferner resultiert der Vorteil, dass nach längerer Betriebsdauer der Pumpe, wenn Degradationen oder sonstige Veränderungen in dem Dichtungselement auftreten können, das elastische Vorspannelement diese Veränderungen kompensiert und das Dichtungselement zuverlässig gegen die Wandung der Dichtungsnut oder einen anderen Kontaktpartner drückt.

Gemäss einer bevorzugten Ausgestaltung ist im Verbindungsbereich eine Ausnehmung zur Aufnahme des Vorspannelements vorgesehen, so dass dieses sicher an der gewünschten Stelle platziert werden kann.

Um eine gute Vorspannung zu realisieren hat es sich als vorteilhaft erwiesen, wenn sich das Vorspannelement parallel zu dem ersten Dichtungselement oder parallel zu dem zweiten Dichtungselement erstreckt.

In einem bevorzugten Ausführungsbeispiel ist die erste Dichtungsnut oder die zweite Dichtungsnut zur Aufnahme eines schnurförmigen Dichtungselements ausgestaltet. Je nachdem, an welcher Stelle der Pumpe die Abdichtung zwischen individuellen Dichtungselementen erfolgen soll, gibt es verschiedene bevorzugte Varianten, die natürlich auch alle zusammen an unterschiedlichen Stellen in der gleichen Pumpe realisiert sein können:
Eine Variante besteht darin, dass die erste Dichtungsnut und die zweite Dichtungsnut zur Aufnahme eines schnurförmigen Dichtungselements ausgestaltet sind. Diese Variante eignet sich für die Verbindung bzw. das Kontaktieren von zwei schnurförmigen Dichtungselementen wie es beispielsweise in mehrstufigen Pumpen realisiert sein kann.

Eine andere Variante besteht darin, dass die erste Dichtungsnut oder die zweite Dichtungsnut zur Aufnahme eines ringförmigen Dichtungselements ausgestaltet ist. Diese Variante eignet sich beispielsweise an solchen Verbindungstellen, wo ein ringförmiges Dichtungselement, z.B. ein O-Ring, mit einem schnurförmigen Dichtungselement zusammenwirken muss. Dies ist beispielsweise an einem Seitendeckel der Pumpe der Fall.

Eine weitere Variante besteht darin, dass der Verbindungsbereich derart ausgestaltet ist, dass das erste und das zweite Dichtungselement im Verbindungsbereich im wesentlichen parallel verlaufen können. Diese Variante ist insbesondere geeignet, um eine eigentlich T-förmige Verbindung zwischen zwei Dichtungsstellen zu ersetzen bzw. zu realisieren.

Eine vorteilhafte Massnahme besteht ferner darin, wenn zumindest die erste Dichtungsnut im Unterteil des Gehäuses vorgesehen ist, weil dies insbesondere eine einfachere Fertigung und eine leichtere Montage ermöglicht.

Gemäss einem bevorzugten Ausführungsbeispiel ist die erste Dichtungsnut zur Abdichtung des Innenraums der Pumpe gegen den Umgebungsdruck angeordnet. Da diese Dichtungsnut über die gesamte axiale Länge der Pumpe durchgängig - also ohne Unterbrechung - gestaltet werden kann, lässt sich hiermit eine besonders zuverlässige Abdichtung zwischen dem Innenraum der Pumpe und der Umgebung realisieren

Eine ebenfalls bevorzugte Ausführungsform ist es, wenn die zweite Dichtungsnut an einem Seitendeckel vorgesehen ist, welcher das Gehäuse der Pumpe bezüglich einer axialen Richtung verschliesst. Da an dieser kritischen Stelle üblicherweise drei Bauteile, nämlich das Unterteil und der Deckel des Gehäuses sowie der Seitendeckel, aneinandergrenzen und hier eine Abdichtung gegen die Umgebung der Pumpe erfolgen muss, eignet sich die erfindungsgemässe Lösung insbesondere auch für diese Stelle, um eine sichere Abdichtung zu gewährleisten.

Eine weitere bevorzugte Ausführungsform besteht darin, dass die zweite Dichtungsnut zur Abdichtung zwischen zwei Druckräumen in der Pumpe angeordnet ist, in welchen im Betriebszustand verschiedene Drücke herrschen.

Bezüglich des Materials ist es bevorzugt, wenn die Dichtungselemente aus einem Elastomer, insbesondere aus einem Nitrilkautschuk, speziell aus Nitril-Butadien-Kautschuk NBR gefertigt sind.

Die erfindungsgemässe Pumpe eignet sich insbesondere auch für sehr hohe Betriebsdrücke und kann vorzugsweise als Zentrifugalpumpe mit einem Auslegungsdruck von mindestens 50 bar, vorzugsweise mindestens 100 bar, ausgestaltet werden.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen, teilweise im Schnitt:
- Fig. 1:: ein perspektivische Darstellung eines Ausführungsbeispiels einer erfindungsgemässen Pumpe, wobei der Deckel entfernt und nur symbolisch angedeutet ist,
- Fig. 2:: eine Aufsicht auf das Unterteil des Gehäuses des Ausführungsbeispiels aus Fig. 1,
- Fig. 3:: den Seitendeckel des Ausführungsbeispiels aus Fig. 1 sowie einen Teil des Gehäuses,
- Fig. 4:: eine schematisierte Darstellung des Seitendeckels und des Gehäuses im zusammmengesetzten Zustand mit eingelegten Dichtungselementen,
- Fig. 5:: wie Fig. 4, jedoch für eine Variante des Ausführungsbeispiels,
- Fig. 6:: eine schematisierte Darstellung des Details I aus Fig. 2,
- Fig. 7:: eine perspektivische Darstellung eines Ausführungsbeispiels eines Verbindungselements, und
- Fig. 8:: einen Querschnitt durch das Verbindungselement mit eingelegten Dichtungselementen.

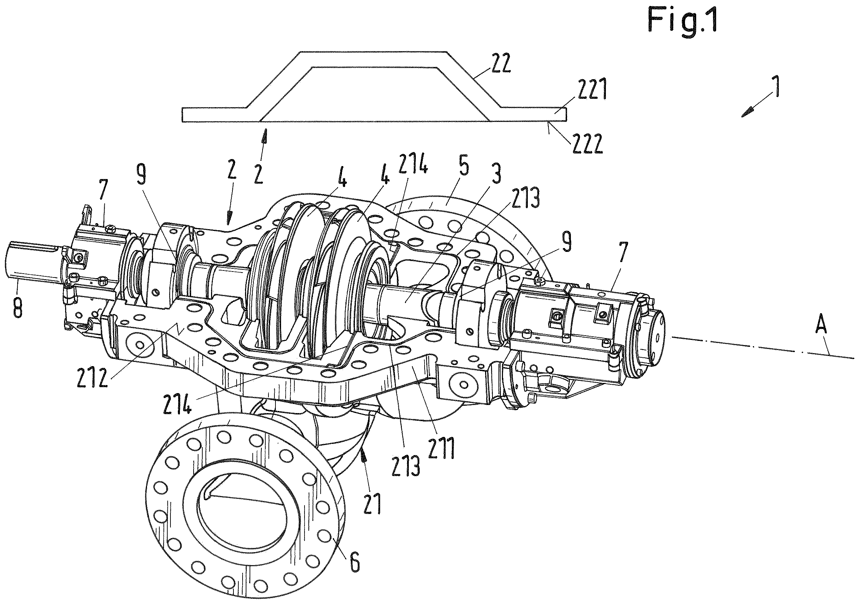

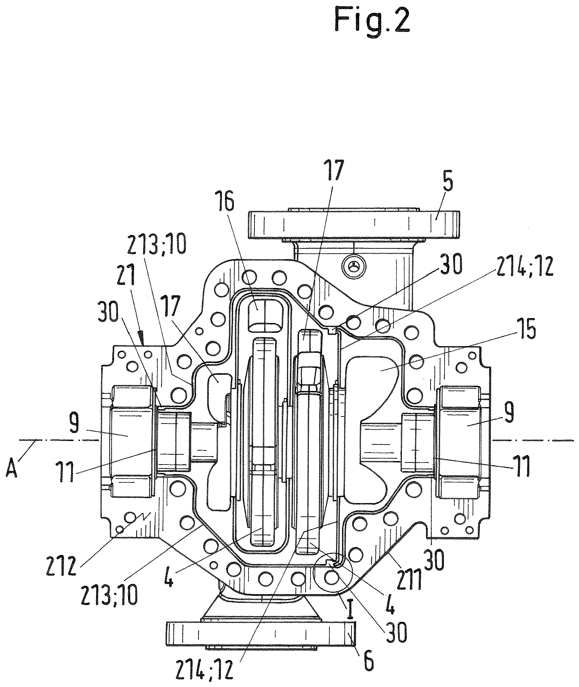

Fig. 1 zeigt in einer perspektivischen Darstellung ein Ausführungsbeispiel einer erfindungsgemässen axial geteilten Pumpe, die gesamthaft mit dem Bezugszeichen 1 bezeichnet ist. Die Pumpe 1 umfasst ein Gehäuse 2, das axial geteilt ist, und ein Unterteil 21 sowie einen Deckel 22 umfasst. Zum besseren Verständnis ist in Fig. 2 der Deckel 22 entfernt und nur symbolisch angedeutet. Fig. 2 zeigt eine Aufsicht auf das Unterteil 21 des Gehäuses 2 dieses Ausführungsbeispiels.

Das Gehäuse 2 umfasst einen Einlass 5 zum Ansaugen eines zu fördernden Fluids sowie einen Auslass 6 für das Fluid. Ferner umfasst die Pumpe 1 eine rotierbare Welle 3, deren Längsrichtung eine axiale Richtung A festlegt. Auf der Welle 3 ist mindestens ein Laufrad 4, im vorliegenden Fall sind es zwei Laufräder 4, drehfest montiert, welches das Fluid vom Einlass 5 zum Auslass 6 fördert. Ferner ist an den beiden Enden bezüglich der axialen Richtung A der Pumpe 1 jeweils eine Lagervorrichtung 7 vorgesehen, um die Welle 3 der Pumpe 1 zu lagern. Die darstellungsgemäss linke Lagervorrichtung 7 (Fig. 1) ist ferner mit einer Kupplung 8 versehen, die mit einem nicht dargestellten Antrieb verbindbar ist, welcher die Welle 3 der Pumpe 1 in Rotation versetzt.

Mit dem Begriff axial geteilte Pumpe 1 bzw. axial geteiltes Gehäuse 2 ist wie allgemein üblich gemeint, dass das Gehäuse 2 parallel zur Längsrichtung der Welle 3 geteilt ist, also in einer Ebene, welche die Längsachse der Welle 3 enthält.

Im speziellen handelt es sich bei der in den Fig. 1 und Fig. 2 dargestellten Pumpe 1 um eine axial geteilte mehrstufige - hier zweistufige - Zentrifugalpumpe, die einflutig ausgestaltet ist und in einer sogenannten Between-Bearing-Anordnung, d. h. die Laufräder 4 befinden sich zwischen den Lagervorrichtungen 7. Es versteht sich, dass die Erfindung nicht auf solche Pumpentypen beschränkt ist, sondern auch für alle anderen Pumpen mit axial geteiltem Gehäuse 1 geeignet ist, beispielsweise einstufige Pumpen, also solche mit nur einem Laufrad 4, doppelflutige Pumpen mit einstufiger oder mehrstufiger Ausgestaltung oder andere Pumpentypen als Zentrifugalpumpen.

Bezüglich der axialen Richtung A ist das Gehäuse 2 der Pumpe 1 jeweils durch einen Seitendeckel 9 verschlossen, der im vorliegenden Fall gleichzeitig den Abschlussdeckel einer mechanischen Wellendichtung darstellt.

Der Deckel 22 und das Unterteil 21 des Gehäuses 2 sind im montierten Zustand in direktem Kontakt miteinander, das heisst zwischen diesen beiden Teilen ist keine Flachdichtung vorgesehen, welche den direkten Kontakt zwischen dem Unterteil 21 und dem Deckel 22 verhindert. Dazu umfasst das Unterteil 21 einen ersten Flansch 211, der sich im montierten Zustand in der Ebene der axialen Teilung des Gehäuses 2 erstreckt und dessen darstellungsgemäss obere Oberfläche eine erste Dichtfläche 212 bildet. In sinngemäss gleicher Weise ist der Deckel 22 mit einem zweiten Flansch 221 versehen, der sich im montierten Zustand in der Ebene der axialen Teilung des Gehäuses 2 erstreckt und dessen darstellungsgemäss untere Oberfläche (Fig. 1) eine zweite Dichtfläche 222 bildet.

Nach Montage des Deckels 22 auf dem Unterteil 21 stehen die erste Dichtfläche 212 und die zweite Dichtfläche 222 in direktem Kontakt miteinander, um eine dichtende Verbindung zwischen dem Unterteil 21 und dem Deckel 22 des Gehäuses 2 zu bilden. In der ersten Dichtfläche 212 des Unterteils 21 ist eine erste Dichtungsnut 213 vorgesehen, welche sich von dem darstellungsgemäss linken Seitendeckel 9 in axialer Richtung A der inneren Kontur der Pumpe 1 folgend bis zu dem anderen Seitendeckel 9 erstreckt. Diese erste Dichtungsnut 213 ist auf beiden Seiten der Welle 3 vorgesehen. In die erste Dichtungsnut 213 ist ein erstes Dichtungselement 10 eingelegt, welches hier als schnurförmiges Dichtungselement 10 ausgestaltet ist und welches sich über die gesamte Länge der ersten Dichtungsnut 213 erstreckt. Das erste Dichtungselement 10 dichtet den Innenraum der Pumpe 1 gegenüber der Umgebung ab. Daher wird die erste Dichtungsnut 213 auch als äussere Dichtungsnut 213 bezeichnet. Das erste hier schnurförmige Dichtungselement 10 hat üblicherweise einen runden Querschnitt, so wie es beispielsweise von handelsüblichen O-Ringen bekannt ist. Natürlich ist es auch möglich, dass das schnurförmige Dichtungselement einen anderen Querschnitt aufweist, beispielsweise einen rechteckigen und insbesondere einen quadratischen Querschnitt. Dabei ist das erste Dichtungselement 10 bezüglich seines Durchmessers so bemessen, dass es im unmontierten Zustand über den Rand der ersten Dichtungsnut 213 hinaussteht. Bei der Montage des Deckels 22 auf das Unterteil 21 wird somit das erste schnurförmige Dichtungselement 10 elastisch verformt und sorgt somit für eine zuverlässige Abdichtung zwischen dem Unterteil 21 und dem Deckel 22 des Gehäuses 2.

Die Befestigung des Deckels 22 auf dem Unterteil 21 erfolgt vorzugsweise mittels Bolzen oder Schrauben, welche durch die in der ersten Dichtfläche 212 vorgesehene Bohrungen oder Gewindebohrungen (ohne Bezugszeichen in Fig. 1 und Fig. 2) greifen, sodass das Unterteil 21 und der Deckel 22 fest und dichtend miteinander verschraubt sind.

Alternativ ist es auch möglich, die Dichtungsnut 213 im Deckel 22 des Gehäuses 2 vorzusehen, oder sowohl im Unterteil 21 als auch im Deckel 22 eine Dichtungsnut vorzusehen. Aus fertigungs- und montagetechnischen Gründen ist es bevorzugt, die Dichtungsnut 213 bzw. die Dichtungsnuten 213 nur im Unterteil 21 vorzusehen.

Die erste Dichtungsnut 213 bzw. das in sie eingelegte erste Dichtungselement 10 muss üblicherweise mit anderen Dichtungsnuten bzw. Dichtungselementen verbunden oder in Kontakt gebracht werden, sodass diese beiden Dichtungselemente zusammenwirken können. Solche Verbindungsstellen sind üblicherweise kritische Bereiche, weil es hier potentiell einfacher zu Leckagen kommen kann.

Im Folgenden wird die Erfindung anhand der Beispiele von zwei solchen kritischen Verbindungsstellen erläutert, nämlich anhand der Abdichtung zwischen dem Gehäuse 2 und dem Seitendeckel 9 und anhand des in Fig. 2 mit I bezeichneten Bereichs, wo ein Dichtungselement zwischen zwei benachbarten Druckräumen der Pumpe 1 mit der ersten bzw. äusseren Dichtungsnut 213 und dem darin eingelegten ersten Dichtungselement 10 zusammenwirken muss. Es versteht sich natürlich, dass es solche bevorzugte Ausgestaltungen der Erfindung gibt, bei denen diese beiden kritischen Verbindungsstellen und gegebenenfalls gleiche oder sinngemäss gleiche Verbindungsstellen alle erfindungsgemäss ausgestaltet sind. Natürlich ist es aber auch möglich und je nach Anwendungsfall gegebenenfalls auch bevorzugt, wenn nicht alle kritischen Verbindungsstellen gemäss der Erfindung ausgestaltet sind, sondern beispielsweise nur die Abdichtung zwischen dem Seitendeckel 9 und dem Gehäuse 2 oder nur eine andere Verbindungsstelle zwischen zwei Dichtungselementen.

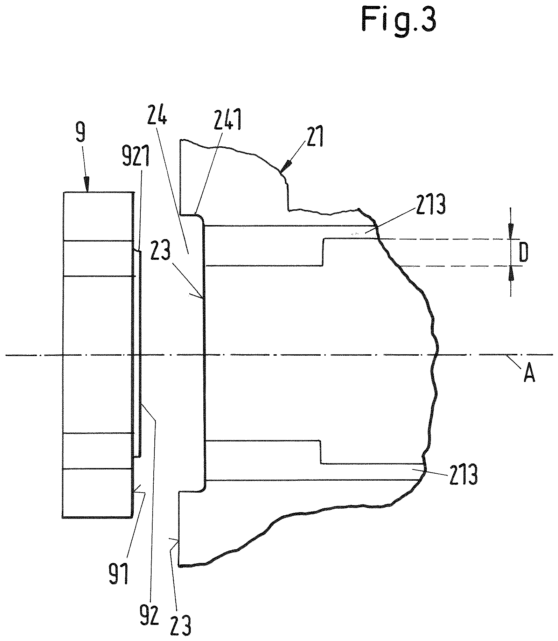

Zur Erläuterung der Abdichtung zwischen dem Seitendeckel 9 und dem Gehäuse 2 zeigt Fig. 3 in einer vergrösserten Darstellung den Seitendeckel 9 und einen Teil des Gehäuses 2 in einer Aufsicht auf das Unterteil 21, wobei der Seitendeckel 9 noch nicht mit dem Gehäuse 2 zusammengefügt ist. Zum Abdichten zwischen dem Seitendeckel 9 und dem Gehäuse 2 weist der Seitendeckel 9 eine erste Kontaktfläche 91 auf, welche mit einer zweiten Kontaktfläche 23 zusammenwirkt, die am Gehäuse 2 vorgesehen ist. Die zweite Kontaktfläche 23 umgibt die Welle 3 und erstreckt sich sowohl über das Unterteil 21 des Gehäuses 2 als auch über den Deckel 22 des Gehäuses 2. Zu erkennen ist in Fig. 3 auch die erste Dichtungsnut 213 im Unterteil 21 des Gehäuses 2, welche sich bis in die zweite Kontaktfläche 23 des Gehäuses 2 erstreckt.

Die dichtende Verbindung zwischen dem Seitendeckel 9 und dem Gehäuse 2 stellt eine besondere Herausforderung dar, weil hier drei Bauteile aneinandergrenzen, nämlich der Seitendeckel 9, das Unterteil 21 und der Deckel 22 des Gehäuses 2. Die erste Kontaktfläche 91 des Seitendeckels 9 wird durch eine seiner Begrenzungsflächen in axialer Richtung A gebildet. Die zweite Kontaktfläche 23 des Gehäuses 2 steht senkrecht auf der axialen Richtung A, sodass sie der ersten Kontaktfläche 91 gegenüberliegt.

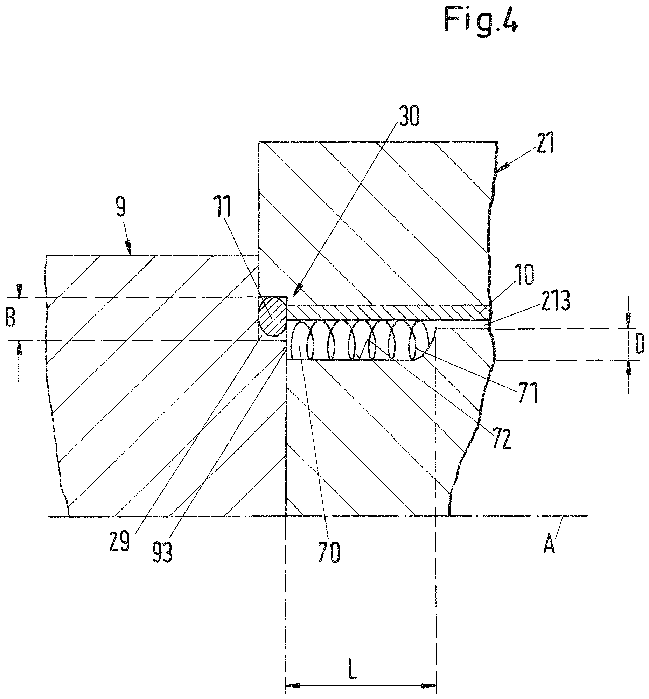

In der zweiten Kontaktfläche 23 des Gehäuses 2 ist ein Rücksprung 24 vorgesehen, der hier als zentral Ausnehmung in der zweiten Kontaktfläche 23 ausgestaltet ist. Ferner ist in der ersten Kontaktfläche 91 des Seitendeckels 9 ein Vorsprung 92 vorgesehen, der hier als zentrale Erhebung ausgestaltet ist. Der Rücksprung 24 und der Vorsprung 92 sind dabei so ausgestaltet und zueinander angeordnet, dass sie im montierten Zustand des Seitendeckels 9 gemeinsam eine zweite Dichtungsnut 29 bilden (siehe Fig. 4), die hier als ringförmige Nut ausgestaltet ist und der Aufnahme eines zweiten Dichtungselements 11 dient, das hier als ringförmiges Dichtungselement 11 ausgebildet ist.

Hierzu ist bei dem hier beschriebenen Ausführungsbeispiel die zentrale Ausnehmung, welche den Rücksprung 24 in der zweiten Kontaktfläche 23 bildet, im wesentlichen mit kreisförmigem Querschnitt ausgebildet, dessen Durchmesser grösser ist als der Durchmesser der ebenfalls im wesentlichen mit kreisförmigem Querschnitt ausgebildeten Erhebung, welche den Vorsprung 92 in der ersten Kontaktfläche 91 bildet. Dadurch entsteht erst nach dem Zusammensetzten des Seitendeckels 9 und des Gehäuses 2 die gemeinsam gebildete zweite Dichtungsnut 29. Diese zweite Dichtungsnut 29 wird folglich radial aussen durch die Seitenwand 241 des Rücksprungs 24 in der zweiten Kontaktfläche 23 des Gehäuses 2 begrenzt und radial innen durch die seitliche Begrenzungsfläche 921 des Vorsprungs 92 in der ersten Kontaktfläche 91 des Seitendeckels 9.

Zum besseren Verständnis zeigt Fig. 4 in einer schematisierten Darstellung des Seitendeckels 9 und Teilen des Gehäuses 2 im zusammengesetzten Zustand die zweite Dichtungsnut 29, welche durch das Zusammensetzten des Seitendeckels 9 und des Gehäuses 2 entsteht. Fig. 4 beschränkt sich auf die Illustration der oberen Hälfte von Fig. 3, weil dies für das Verständnis ausreichend ist. In Fig. 4 ist das zweite Dichtungselement 11 in die zweite Dichtungsnut 29 und das erste Dichtungselement 10 in die erste Dichtungsnut 213 eingelegt.

Durch das Zusammenfügen des Seitendeckels 9 und des Gehäuses 2 entsteht durch das Zusammenwirken des Vorsprungs 92 im Seitendeckel 9 und des Rücksprungs 24 im Gehäuse 2 die zweite Dichtungsnut 29, welche die Welle 3 der Pumpe 1 umgibt. Innerhalb des von der zweiten Dichtungsnut 29 begrenzten Bereichs sind die erste Kontaktfläche 92 und die zweite Kontaktfläche 23 nach Montage des Seitendeckels in direktem Kontakt miteinander.

Wie ebenfalls aus Fig. 4 ersichtlich, ist es bevorzugt, dass die erste Dichtungsnut 213 im wesentlichen senkrecht in die zweite Dichtungsnut 29 einmündet. Da die an der zweiten Kontaktfläche 23 platzierte Endfläche des schnurförmigen ersten Dichtungselements 10 vorzugsweise eine planare also ungewölbte Querschnittsfläche ist, lässt sich durch diese Massnahme ein möglichst guter Kontakt zwischen dem schnurförmigen ersten Dichtungselement 10 und dem ringförmigen zweiten Dichtungselement 11 in der zweiten Dichtungsnut 29 realisieren.

Auch ist es bevorzugt, wenn die radiale Breite der zweiten Dichtungsnut 29 - also ihre Ausdehnung senkrecht zur axialen Richtung A - grösser ist als die Breite des schnurförmigen ersten Dichtungselements 10. Die erste Dichtungsnut 213 ist dann so angeordnet, dass sie vorzugsweise mittig in die zweite Dichtungsnut 29 einmündet.

Die erste Dichtungsnut 213 und die zweite Dichtungsnut 29 sind folglich durch einen Verbindungsbereich 30 miteinander verbunden, in welchem die erste Dichtungsnut 213 in die zweite Dichtungsnut 29 einmündet. Erfindungsgemäss ist in dem Verbindungsbereich 30 ein elastisches Vorspannelement 71 vorgesehen, welches eine Vorspannung auf eines der beiden Dichtungselemente 10, 11 ausübt. Erfindungsgemäß ist das Vorspannelement als Feder 71 ausgestaltet. Zur Aufnahme der Feder 71 weist der Verbindungsbereich 30 eine Ausnehmung 70 auf. Die Ausnehmung 70 ist an der Einmündung der ersten Dichtungsnut 213 in die zweite Kontaktfläche 23 bzw. in die zweite Dichtungsnut 29 vorgesehen und bezüglich der ersten Dichtungsnut 213 radial innenliegend angeordnet. Die Ausnehmung 70 verläuft parallel zur ersten Dichtungsnut 213, derart, dass die erste Dichtungsnut 213 in ihrem Endbereich in axialer Richtung A über eine Länge L eine um die Breite D der Ausnehmung 70 vergrösserte Ausdehnung in radialer Richtung aufweist. Wie dies Fig. 4 zeigt, ist die radial innenliegende Begrenzungsfläche 72 der Ausnehmung 70 so angeordnet, dass sie näher an der Welle 3 liegt als die radial innenliegende Begrenzungsfläche der zweiten Dichtungsnut 29. Dadurch existiert zwischen der zweiten Dichtungsnut 29 und der bezüglich dieser radial innenliegend angeordneten Begrenzungsfläche 72 der Ausnehmung 70 ein Absatz 93, der Teil der ersten Kontaktfläche 91 des Seitendeckels 9 ist und an welchem sich die Feder 71 abstützen kann.

Die in die Ausnehmung 70 des Verbindungsbereichs 30 eingelegte Feder 71 erzeugt eine radial nach aussen gerichtete Vorspannung auf das schnurförmige erste Dichtungselement 10. Die Feder 71 erstreckt sich parallel zu dem schnurförmigen ersten Dichtungselement 10 und ist so bemessen, dass sie bezüglich der radialen Richtung breiter ist als die Breite D der Ausnehmung 70. Nach der Montage des Seitendeckels 9 kann sich die Feder 71 an dem Absatz 93 abstützen.

Das Vorspannelement bzw. die Feder 71 ist vorzugsweise so angeordnet, das die Vorspannung auf das Dichtungselement 10 in Richtung des abnehmenden Drucks generiert wird, gemäss der Darstellung in Fig. 4 also radial nach aussen. Wie dies insbesondere aus Fig. 2 ersichtlich ist, herrscht während des Betriebs der Pumpe 1 ausserhalb des Gehäuses 2 der Umgegungs- oder der Atmosphärendruck, während im Inneren des Gehäuses 2 ein erhöhter Druck herrscht. Der Druck nimmt also von innen nach aussen ab, folglich ist die Feder 71 (siehe Fig. 4) so angeordnet, dass die von ihr generierte Vorspannung auf das erste Dichtungselement 10 in Richtung des abnehmenden Drucks wirkt.

Das erfindungsgemäss vorgesehene Vorspannelement 71 gewährleistet somit auch an Verbindungsstellen zwischen Dichtungselementen für alle Betriebszustände der Pumpe 1 eine zuverlässige Abdichtung.

Das Vorspannelement 71 bietet mehrere Vorteile. So ist es bei der Montage z. B. möglich, das schnurförmige erste Dichtungselement 10 in die erste Dichtungsnut 213 einzulegen und seinen Endbereich an der zweiten Dichtungsnut 29 mittels des Vorspannelements 71 in der korrekten Position zu fixieren. Während des Betriebs der Pumpe 1 gewährleistet das Vorspannelement 71 einen zusätzlichen Beitrag, dass auch bei kleineren Betriebsdrücken, also beispielsweise beim Anfahren der Pumpe 1, sofort eine ausreichende Dichtwirkung zwischen dem Gehäuse 2 und dem Seitendeckel 9 realisiert ist. Auch im Hinblick auf den Langzeitbetrieb der Pumpe 1 ist das Vorspannelement 71 vorteilhaft. Kommt es nämlich mit zunehmender Betriebsdauer der Pumpe 1 zu Degradationen, Ermüdungen oder sonstigen Änderungen oder Abnutzungserscheinungen des schnurförmigen ersten Dichtungselements 10, so können diese durch die Wirkung des Vorspannelements 71 kompensiert werden, weil dieses das erste Dichtungselement 10 zuverlässig gegen die radial aussenliegende Wand der Dichtungsnut 213 drückt.

Bei der hier erläuterten Abdichtung zwischen dem Seitendeckel 9 und dem Gehäuse 2 der Pumpe 1 ist also die erste Dichtungsnut 213 zur Aufnahme des schnurförmigen Dichtungselements 10 vorgesehen und im Unterteil 21 des Gehäuses angeordnet. Die zweite Dichtungsnut 29 ist zur Aufnahme des hier ringförmigen zweiten Dichtungselements 11 vorgesehen und ist an dem Seitendeckel 9 angeordnet, welcher das Gehäuse 2 der Pumpe 1 bezüglich der axialen Richtung A verschliesst. Dabei bildet sich die zweite Dichtungsnut 29 erst beim Zusammenbau durch das Zusammenwirken des Seitendeckels 9 mit dem Gehäuse 2 aus.

Die erste Dichtungsnut 213 mit dem darin eingelegten schnurförmigen ersten Dichtungselement 10 ist bei der hier beschriebenen Ausgestaltung zur Abdichtung des Innenraums der Pumpe 1 gegen den Umgebungsdruck angeordnet.

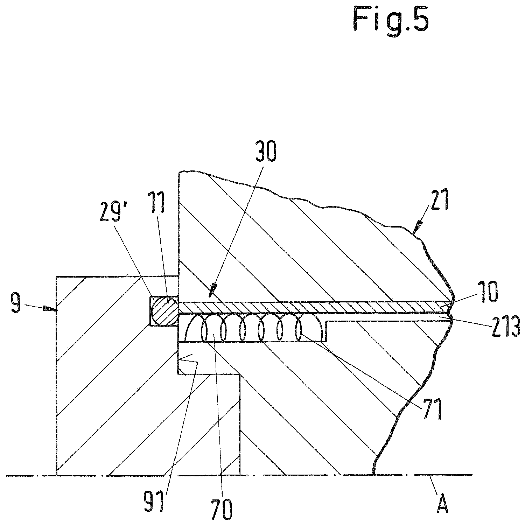

Fig. 5 zeigt in einer zu Fig. 4 analogen Darstellung eine Variante des Ausführungsbeispiels gemäss Fig. 1 und Fig. 2. Im Folgenden wird nur auf die Unterschiede zu dem beschriebenen Ausführungsbeispiel eingegangen. Ansonsten gelten die voranstehenden Erläuterungen in gleicher oder sinngemäss gleicher Weise auch für diese Variante. Insbesondere haben die Bezugszeichen für gleiche oder von der Funktion her gleichwertige Teile die gleiche Bedeutung.

Bei der in Fig. 5 dargestellten Variante ist eine zweite Dichtungsnut 29' vorgesehen, die vollständig im Seitendeckel 9 angeordnet ist und nicht erst wie vorangehend beschrieben durch das Zusammenwirken des Seitendeckels 9 mit dem Gehäuse 2 entsteht. Dazu ist in der ersten Kontaktfläche 91 des Seitendeckels 9 die ringförmig ausgestaltete zweite Dichtungsnut 29' vorgesehen, welche im montierten Zustand die Welle 3 der Pumpe 1 konzentrisch umgibt. In die zweite Dichtungsnut 29' ist das ringförmig ausgestaltete zweite Dichtungselement 11 eingelegt, welches im Verbindungsbereich 30 mit dem schnurförmigen ersten Dichtungselement 10 zusammenwirkt. Bei dieser Variante erfolgt die Abdichtung im Verbindungsbereich 30 hauptsächlich durch eine axiale Dichtungsanordnung, also hauptsächlich durch eine Abdichtung in axialer Richtung, während bei der in Fig. 4 gezeigten Ausgestaltung eine axiale Dichtung mit einer radialen Dichtung kombiniert wird.

Selbstverständlich kann auch an dem anderen der beiden Seitendeckel 9 die Abdichtung in gleicher Weise wie vorangehend beschrieben erfolgen.

Im Folgenden wird eine zweite kritsche Verbindungsstelle erläutert, nämlich der in Fig. 1 mit bezeichnete Bereich, wo ein Dichtungselement zwischen zwei benachbarten Druckräumen der Pumpe 1 mit der ersten bzw. äusseren Dichtungsnut 213 und dem darin eingelegten ersten Dichtungselement 10 zusammenwirken muss. Die voranstehenden Erläuterungen gelten in gleicher oder sinngemäss gleicher Weise auch für diese Verbindungsstelle. Die Bezugszeichen haben die gleiche Bedeutung wie vorangehend bereits erläutert.

Die Pumpe 1 ist im Ausführungsbeispiel gemäss Fig. 1 und Fig. 2 als zweistufige Zentrifugalpumpe ausgestaltet. Es existieren somit im Innern der Pumpe 1 mehrere Druckräume, in denen im Betriebszustand unterschiedliche Drücke herrschen (siehe Fig. 2): In einem Saugraum 15 der Pumpe 1 herrscht der Saugdruck, der am Einlass 5 der Pumpe 1 anliegt, in einem Auslassraum 16 herrscht der Förderdruckdruck, mit welchem das Fluid am Auslass 6 der Pumpe 1 zur Verfügung steht. In einem Zwischenraum 17 herrscht ein Zwischendruck, dessen Betrag zwischen dem Saugdruck und dem Förderdruck liegt. Bei der zweistufigen Pumpe 1 wird das zu fördernde Fluid vom Einlass 5 kommend durch das darstellungsgemäss rechte Laufrad 4 der ersten Stufe in den Zwischenraum 17 gefördert und dabei auf den Zwischendruck gebracht. Von dem Zwischenraum 17 fördert das darstellungsgemäss linke Laufrad 4 der zweiten Stufe das Fluid in den Auslassraum 16, wo es dann unter dem Förderdruck steht und am Auslass 6 der Pumpe 1 zur Verfügung steht.

Zur Abdichtung zwischen den verschiedenen Druckräumen in der Pumpe 1 sind weitere Dichtungsnuten vorgesehen. In dem Unterteil 21 ist mindestens eine weitere zweite Dichtungsnut 214 vorgesehen, welche auch als innere Dichtungsnut 214 bezeichnet wird, weil sie der Abdichtung zwischen verschiedenen Druckräumen in der Pumpe dient, im vorliegenden Ausführungsbeispiel dient die zweite Dichtungsnut 214 der Abdichtung zwischen dem Saugraum 15 und dem Zwischenraum 17. Wie dies insbesondere Fig. 2 zeigt, ist die zweite Dichtungsnut 214 ebenfalls auf beiden Seiten der Welle 3 vorgesehen. In die zweite Dichtungsnut 214 ist ein schnurförmiges zweites Dichtungselement 12 eingelegt, welches sich über die gesamte Länge der zweiten Dichtungsnut 214 erstreckt. Auch das schnurförmige zweite Dichtungselement 12 hat üblicherweise einen runden Querschnitt, so wie es beispielsweise von handelsüblichen O-Ringen bekannt ist. Natürlich ist es auch möglich, dass das schnurförmige zweite Dichtungselement einen anderen Querschnitt aufweist, beispielsweise einen rechteckigen und insbesondere einen quadratischen Querschnitt. Dabei ist das zweite Dichtungselement 12 bezüglich seines Durchmessers so bemessen, dass es im unmontierten Zustand über den Rand der zweiten Dichtungsnut 214 hinaussteht. Bei der Montage des Deckels 22 auf das Unterteil 21 wird somit das zweite Dichtungselement 12 elastisch verformt und sorgt somit für eine zuverlässige Abdichtung zwischen dem Saugraum 15 und dem Zwischenraum 17.

Alternativ ist es auch möglich, die erste und/oder die zweite Dichtungsnut 213 bzw. 214 so wie gegebenenfalls weitere Dichtungsnuten im Deckel 22 des Gehäuses 2 vorzusehen, oder sowohl im Unterteil 21 als auch im Deckel 22 Dichtungsnuten vorzusehen. Aus fertigungs- und montagetechnischen Gründen ist es bevorzugt, wenn alle Dichtungsnuten 213, 214 nur im Unterteil 21 vorgesehen sind.

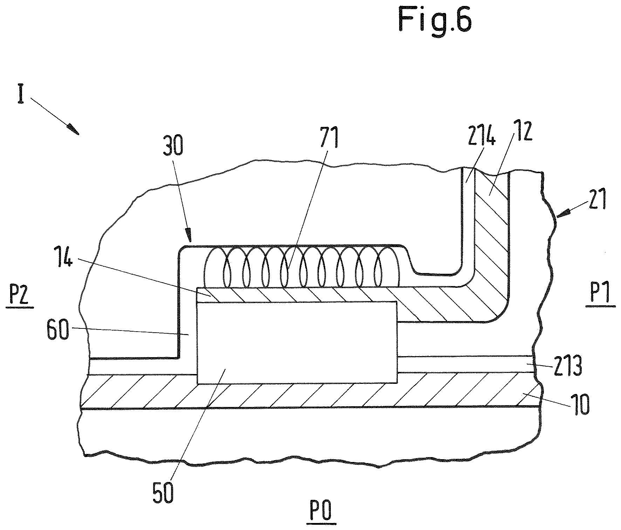

Wie dies insbesondere Fig. 2 zeigt, erstreckt sich die zweite Dichtungsnut 214 in der zur axialen Richtung A senkrechten radialen Richtung. Die zweite Dichtungsnut 214 ist durch den Verbindungsbereich 30 mit der ersten Dichtungsnut 213 verbunden, damit die beiden Dichtungselemente 10 und 12 zusammenwirken bzw. verbunden werden können. Dies wird im Folgenden näher erläutert. Dazu zeigt Fig. 6 in einer vergrösserten und schematisierten Darstellung des Details I aus Fig. 2 den Verbindungsbereich 30 der zweiten Dichtungsnut 214 mit der ersten Dichtungsnut 213. Zum besseren Verständnis sind in Fig. 4 das erste und das zweite schnurförmige Dichtungselement 10 bzw. 12 jeweils schraffiert dargestellt.

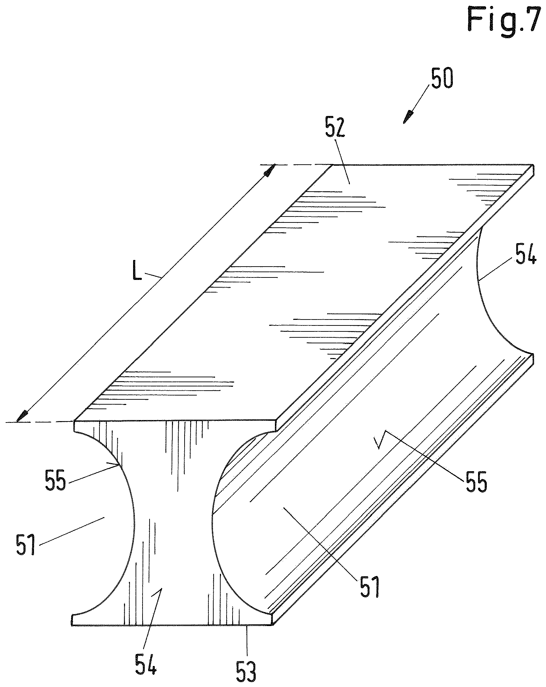

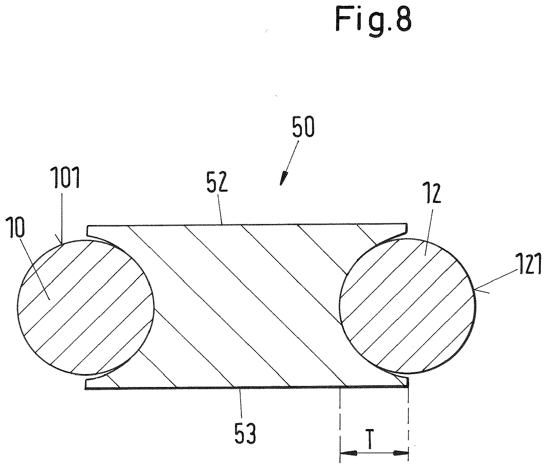

In dem Verbindungsbereich 30 ist ein Verbindungselement 50 vorgesehen. Zum besseren Verständnis zeigen Fig. 7 eine perspektivische Darstellung eines Ausführungsbeispiels des Verbindungselements 50 und Fig. 8 einen Querschnitt durch das Verbindungselement 50, wobei in Fig. 8 die beiden schnurförmigen Dichtungselemente 10, 12 in das Verbindungselement 50 eingelegt sind.

Ferner ist im Verbindungsbereich 30 das Vorspannelement 71 vorgesehen, das auch hier erfindungsgemäß als Feder 71 ausgestaltet ist. Die Feder 71 erstreckt sich parallel zu dem geraden Ende 14 des zweiten Dichtungselements 12 und übt auf dieses eine Vorspannung aus, welche das zweite Dichtungselement 12 bzw. sein gerades Ende 14 gegen das Verbindungselement 50 drückt. Diese Vorspannung überträgt sich vermittelt durch das Verbindungselement 50 auch auf das erste Dichtungselement 10.

Das Verbindungselement 50 (siehe Fig. 7 und Fig. 8) hat eine rechteckige Unterseite 53 und eine dazu parallele rechteckige Oberseite 52, welche durch zwei Endflächen 54 verbunden sind. Seine Längserstreckung ist als Länge L bezeichnet. Das Verbindungselement 50 weist zwei laterale Ausnehmungen 51 auf, die sich jeweils über die gesamte Länge L zwischen den Endflächen 54 erstrecken. Die lateralen Ausnehmungen 51 sind zur Aufnahme je eines schnurförmigen Dichtungselements 10 bzw. 12 ausgestaltet und können - je nach Dichtungselement- identisch oder unterschiedlich ausgebildet sein. Die beiden lateralen Ausnehmungen 51 verlaufen parallel zueinander, sodass die beiden schnurförmigen Dichtungselemente 10 bzw. 12 nach ihrem Einlegen in die Ausnehmungen 51 im Bereich des Verbindungsstücks 50 parallel oder zumindest im wesentlichen parallel zueinander liegen. Somit ist der Verbindungsbereich 30 derart ausgestaltet, dass das erste und das zweite Dichtungselement 10 bzw. 12 im Verbindungsbereich 30 im Wesentlichen parallel verlaufen können.

Jede der lateralen Ausnehmungen 51 des Verbindungselements 50 weist eine innere Kontur 55 auf, welche jeweils der Mantelfläche 101 bzw. 121 des jeweiligen schnurförmigen ersten bzw. zweiten Dichtungselements 10 bzw. 12 folgt, welches in die Ausnehmung 51 eingelegt ist. Haben beispielsweise die Dichtungselemente 10, 12 eine kreisförmige Querschnitssfläche - wie in Fig. 8 dargestellt - so ist die innere Kontur 55 der Ausnehmungen 51 senkrecht zur Längserstreckung der Ausnehmung 51 ebenfalls kreisbogenförmig gekrümmt, wobei der Krümmungsradius im wesentlichen dem des jeweiligen Dichtungselements 10, 12 entspricht.

Aus dieser Massnahme resultiert ein möglichst grossflächiger Kontakt zwischen dem jeweiligen Dichtungselement 10, 12 und dem Verbindungsstück 50.

Die Tiefe T der lateralen Ausnehmung 51 senkrecht zu ihrer Längserstreckung kann je nach Anwendungsfall angepasst werden. Bei Dichtungselementen 10, 12 mit kreisförmigem Querschnitt hat es sich in der Praxis jedoch als hinreichend erwiesen, wenn die Ausnehmung 51 höchstens die Hälfte, vorzugsweise weniger als die Hälfte der Mantelfläche 101, 121 des ersten bzw. zweiten Dichtungselements 10, 12 kontaktiert. Je nach Anwendungsfall und Ausgestaltung des jeweiligen Dichtungselements kann die Tiefe T für die beiden Ausnehmung 51 unterschiedlich sein. Auch kann die Krümmung der inneren Kontur 55 für die beiden Ausnehmungen 51 unterschiedlich sein. Im vorliegenden Ausführungsbeispiel ist die Tiefe T und die Krümmung der inneren Kontur 55 für die beiden Ausnehmungen 51 gleich.

Wie dies Fig. 6 zeigt, ist im Verbindungsbereich 30 der beiden Dichtungsnuten 213, 214 eine Ausnehmung 60 vorgesehen, in welche das Verbindungselement 50 und die Feder 71 eingelegt werden können. Das schnurförmige erste Dichtungselement 10 ist im Bereich des Verbindungselements 50 durchgängig, das heisst, es muss weder aufgeschnitten noch in sonst einer Weise manipuliert werden, sondern wird einfach in die entsprechende laterale Ausnehmung 51 eingelegt.

Das schnurförmige zweite Dichtungselement 12 hat im Verbindungsbereich 30 das Ende 14. Dieses gerade Ende 14 wird in die andere der beiden lateralen Ausnehmungen 51 des Verbindungselements 50 eingelegt und verläuft somit im Bereich des Verbindungselements 50 bzw. im Verbindungsbereich 30 parallel zu dem schnurförmigen ersten Dichtungselement 10. Das zweite Dichtungselement 12 wird bezüglich seiner Länge vorzugsweise so bemessen, dass sein Ende 14 nach dem Einlegen in die laterale Ausnehmung 51 im wesentlichen bündig mit der Endfläche 54 des Verbindungselements 50 abschliesst. Somit ist ein möglichst grossflächiger, dichtender Kontakt zwischen dem jeweiligen Dichtungselement 10, 12 und der es aufnehmenden lateralen Ausnehmung 51 gewährleistet.

Die in Fig. 6 veranschaulichte Anordnung ermöglicht das Ersetzen von sonst T-förmigen Verbindungen oder Kontaktstellen zwischen separaten Dichtungselementen 10, 12 durch eine besonders gut dichtende Verbindung, bei welcher die beiden Dichtungselemente 10, 12 im Verbindungsbereich 30 parallel zueinander geführt werden und bei welcher zusätzlich durch die Feder 71 eine Vorspannung erzeugt wird, welche das zweite Dichtungselement 12 gegen die innere Kontur 55 des Verbindungselements 50 drückt.

Im Betriebszustand herrscht auf der in Fig. 6 darstellungsgemäss rechten Seite des zweiten Dichtungselements 12 ein kleinerer Druck P1 als auf der darstellungsgemäss linken Seite, wo der Druck P2 herrscht. Darstellungsgemäss unterhalb des ersten Dichtungselements 10 herrscht dann ausserhalb des Gehäuses 2 der Umgebungs- bzw. der Atmosphärendruck P0. Durch die Druckdifferenzen werden einerseits die beiden Dichtungselemente 10, 12 dichtend gegen die Wandung der ersten bzw. der zweiten Dichtungsnut 213, 214 gedrückt, andererseits presst die Druckdifferenz unterstützt durch die von der Feder 71 generierte Vorspannung das zweite Dichtungselement 12 gegen die innere Kontur 55 der lateralen Ausnehmung 51, woraus auch eine durch das Verbindungselement 50 vermittelte Kraftwirkung auf das erste Dichtungselement 10 erfolgt, das dadurch gegen die Wandung der ersten Dichtungsnut 213 gedrückt wird.

Das Verbindungselement 50 ist vorzugsweise aus einem Kunststoff gefertigt und kann beispielsweise ein Spritzgussteil sein. Während primär die Formgebung des Verbindungselements 50 für einen möglichst guten Kontakt mit dem jeweiligen Dichtungselement 10 bzw. 12 massgeblich ist, so kann es doch vorteilhaft sein, wenn das Verbindungselement 50 elastisch verformbar ist.

Bei der in Fig. 6 dargestellten Anordnung ist die Ausnehmung 60 im Verbindungsbereich 30 so ausgestaltet, dass sich die Feder 71 parallel zur Längserstreckung bzw. zur Längsausdehnung des Verbindungselements 50 erstreckt und somit parallel zu dem zweiten schnurförmigen Dichtungselement 12. Die Anordnung der Feder 71 ist dabei so, das die Vorspannung in Richtung des abnehmenden Drucks generiert wird, also in der Darstellung gemäss Fig. 6 nach unten.

Auch bei dieser Anordnung bietet das Vorspannelement 71 die bereits vorne erwähnten Vorteile. Während des Betriebs der Pumpe 1 gewährleistet das Vorspannelement 71 einen zusätzlichen Beitrag, dass auch bei kleineren Betriebsdrücken, also beispielsweise beim Anfahren der Pumpe 1, sofort eine ausreichende Dichtwirkung zwischen dem Gehäuse 2 der Pumpe 1 und der Umgebung bzw. zwischen dem Saugraum 15 und dem Zwischenraum 17 realisiert ist. Auch im Hinblick auf den Langzeitbetrieb der Pumpe 1 ist das Vorspannelement 71 an dieser Stelle vorteilhaft. Kommt es nämlich mit zunehmender Betriebsdauer der Pumpe 1 zu Degradationen, Ermüdungen oder sonstigen Änderungen oder Abnutzungserscheinungen der Dichtungselemente 10 bzw. 12, so können diese durch die Wirkung des Vorspannelements 71 kompensiert werden, weil dieses die Dichtungselemente 10 bzw. 12 zuverlässig gegen das Verbindungselement 50 bzw. die Wand der Dichtungsnut 214 drückt.

Die verbesserte Dichtwirkung an der Verbindungsstelle zwischen individuellen Dichtungselementen 10, 11, 12 ist insbesondere auch im Hinblick auf einen möglichst hohen Betriebsdruck der Pumpe 1 vorteilhaft. So kann die Pumpe 1, beispielsweise in einer Ausgestaltung als Zentrifugalfumpe, mit einem Auslegungsdruck von mindestens 50 bar und vorzugsweise mindestens 100 bar konzipiert werden.

Als Material sowohl für das erste schnurförmige Dichtungselement 10 als auch für die beiden zweiten Dichtungselemente 11, 12 eignen sich insbesondere alle an sich bekannten Materialien, die für derartig Dichtungen eingesetzt werden, insbesondere Elastomere wie Nitrilkautschuk und speziell Nitril-Butadien-Kautschuk (NBR).

Auch wenn die Erfindung nur unter näherer Bezugnahme auf zwei Verbindungsbereiche 30 zwischen zwei separaten Dichtungselementen erläutert ist, versteht es sich natürlich, dass auch an anderen oder weiteren Verbindungs- oder Kontaktstellen zwischen Dichtungselementen die Abdichtung in gleicher oder sinngemäss gleicher Weise mit Hilfe des Vorspannelements 71 realisiert sein kann. Dabei kann die entsprechende Dichtung sowohl als axiale (siehe Fig. 5) aber auch als radiale oder eine kombinierte axiale und radiale (siehe Fig. 4) ausgestaltet sein. Selbstverständlich eignet sich die Erfindung auch für solche mehrstufigen Pumpen, die mehr als zwei Stufen aufweisen.

## Patentansprüche

1. Axial geteilte Pumpe zum Fördern eines Fluids mit einem axial geteilten Gehäuse (2), welches ein Unterteil (21) und einen Deckel (22) umfasst, wobei das Unterteil (21) eine erste Dichtfläche (212) aufweist und der Deckel (22) eine zweite Dichtfläche (222), wobei das Unterteil (21) und der Deckel (22) derart aneinander befestigbar sind, dass die beiden Dichtflächen (212, 222) direkten Kontakt miteinander haben, wobei in den Dichtflächen (212, 222) mindestens eine erste Dichtungsnut (213) zur Aufnahme eines ersten Dichtungselements (10) vorgesehen ist, und wobei mindestens eine zweite Dichtungsnut (29; 29'; 214) zur Aufnahme eines zweiten Dichtungselements (11; 12), vorgesehen ist, wobei die erste Dichtungsnut (213) und die zweite Dichtungsnut (29; 29'; 214) durch einen Verbindungsbereich (30) miteinander verbunden sind, und im Verbindungsbereich (30) ein elastisches Vorspannelement (71) vorgesehen ist, welches eine Vorspannung auf eines der beiden Dichtungselemente (10, 11, 12) ausübt,**dadurch gekennzeichnet, dass** das Vorspannelement (71) als Feder (71) ausgestaltet ist.

2. Pumpe nach Anspruch 1, wobei in die erste Dichtungsnut (213) ein erstes Dichtungselement (10) eingelegt ist und in die zweite Dichtungsnut (29; 29'; 214) ein zweites Dichtungselement (11; 12) eingelegt ist.

3. Pumpe nach einem der vorangehenden Ansprüche, bei welcher im Verbindungsbereich (30) eine Ausnehmung (60; 70) zur Aufnahme des Vorspannelements (71) vorgesehen ist.

4. Pumpe nach einem der vorangehenden Ansprüche, bei welcher sich das Vorspannelement (71) parallel zu dem ersten Dichtungselement (10) oder parallel zu dem zweiten Dichtungselement (11; 12) erstreckt.

5. Pumpe nach einem der vorangehenden Ansprüche, bei welcher die erste Dichtungsnut (213) oder die zweite Dichtungsnut (214) zur Aufnahme eines schnurförmigen Dichtungselements (10; 12) ausgestaltet ist.

6. Pumpe nach einem der vorangehenden Ansprüche, bei welcher die erste Dichtungsnut (213) und die zweite Dichtungsnut (214) zur Aufnahme eines schnurförmigen Dichtungselements (10; 12) ausgestaltet sind.

7. Pumpe nach einem der Ansprüche 1-5, bei welcher die erste Dichtungsnut (213) oder die zweite Dichtungsnut (29; 29') zur Aufnahme eines ringförmigen Dichtungselements (11) ausgestaltet ist.

8. Pumpe nach einem der vorangehenden Ansprüche, bei welcher der Verbindungsbereich (30) derart ausgestaltet ist, dass das erste und das zweite Dichtungselement (10; 12) im Verbindungsbereich (30) im wesentlichen parallel verlaufen können.

9. Pumpe nach einem der vorangehenden Ansprüche, bei welcher zumindest die erste Dichtungsnut (213) im Unterteil (21) des Gehäuses (2) vorgesehen ist.

10. Pumpe nach einem der vorangehenden Ansprüche, bei welcher die erste Dichtungsnut (213) zur Abdichtung des Innenraums der Pumpe (1) gegen den Umgebungsdruck angeordnet ist.

11. Pumpe nach einem der vorangehenden Ansprüche, bei welchem die zweite Dichtungsnut (29; 29') an einem Seitendeckel (9) vorgesehen ist, welcher das Gehäuse (2) der Pumpe (1) bezüglich einer axialen Richtung (A) verschliesst.

12. Pumpe nach einem der vorangehenden Ansprüche, bei welcher die zweite Dichtungsnut (214) zur Abdichtung zwischen zwei Druckräumen (15, 17) in der Pumpe angeordnet ist, in welchen im Betriebszustand verschiedene Drücke herrschen.

13. Pumpe nach einem der vorangehenden Ansprüche, bei welcher die Dichtungselemente (10, 11, 12) aus einem Elastomer, insbesondere aus einem Nitrilkautschuk, speziell aus Nitril-Butadien-Kautschuk NBR gefertigt sind.

14. Pumpe nach einem der vorangehenden Ansprüche, ausgestaltet als Zentrifugalpumpe mit einem Auslegungsdruck von mindestens 50 bar, vorzugsweise mindestens 100 bar.

## Claims

1. An axially split pump for conveying a fluid, having an axially split housing (2) that comprises a bottom part (21) and a cover (22), wherein the bottom part (21) has a first sealing surface (212) and the cover (22) has a second sealing surface (222), wherein the bottom part (21) and the cover (22) can be fastened to one another in such a way that the two sealing surfaces (212, 222) have direct contact with one another, wherein at least one first sealing groove (213) is provided in the sealing surfaces (212, 222) for the reception of a first sealing element (10), and wherein at least one second sealing groove (29; 29'; 214) is provided for the reception of a second sealing element (11; 12), wherein the first sealing groove (213) and the second sealing groove (29; 29'; 214) are connected to one another through a connection region (30), and an elastic pre-load element (71) is provided in the connection region (30), the pre-loading element exerting a pre-load onto one of the two sealing elements (10, 11, 12) **characterized in that** an elastic pre-load element (71) is provided as a spring (71).

2. A pump in accordance with claim 1, wherein a first sealing element (10) is inserted into the first sealing groove (213) and a second sealing element (11; 12) is inserted into the second sealing groove (29; 29'; 214).

3. A pump in accordance with one of the preceding claims, in which a cut-out (60; 70) is provided in the connection region (30) for the reception of the pre-loading element (71).

4. A pump in accordance with any one of the preceding claims, in which the pre-loading element (71) extends in parallel with the first sealing element (10) or in parallel with the second sealing element (11; 12).

5. A pump in accordance with any one of the preceding claims, in which the first sealing groove (213) or the second sealing groove (214) is configured for the reception of a string-like sealing element (10; 12).

6. A pump in accordance with any one of the preceding claims, in which the first sealing groove (213) and the second sealing groove (214) is configured for the reception of a string-like sealing element (10; 12).

7. A pump in accordance with any one of the claims 1 to 5, in which the first sealing groove (213) or the second sealing groove (29; 29') is configured for the reception of a ring-like sealing element (11).

8. A pump in accordance with any one of the preceding claims, in which the connection region (30) is configured in such a way that the first and the second sealing element (10; 12) can extend substantially in parallel in the connection region (30).

9. A pump in accordance with any one of the preceding claims, in which at least the first sealing groove (213) is provided in the bottom part (21) of the housing (2).

10. A pump in accordance with any one of the preceding claims, in which the first sealing groove (213) is arranged for sealing the inner space of the pump (1) against the environmental pressure.

11. A pump in accordance with any one of the preceding claims, in which the second sealing groove (29; 29') is provided at a side cover (9) that closes the housing (2) of the pump (1) with respect to an axial direction (A).

12. A pump in accordance with any one of the preceding claims, in which the second sealing groove (214) is arranged for the seal between two pressure spaces (15, 17) in the pump in which pressure spaces different pressures are present in the operating state.

13. A pump in accordance with any one of the preceding claims, in which the sealing elements (10, 11, 12) are manufactured from an elastomer, in particular from a nitrile rubber, specifically from a nitrile butadiene rubber NBR.

14. A pump in accordance with any one of the preceding claims, configured as a centrifugal pump having a design pressure of at least 50 bar, preferably of at least 100 bar.

## Revendications

1. Une pompe à joint axial pour le transport d'un fluide avec un boîtier (2) à joint axial, qui comprend une partie inférieure (21) et un couvercle (22), dans lequel la partie inférieure (21) a une première surface d'étanchéité (212) et le couvercle (22) a une deuxième surface d'étanchéité (222), dans lequel la partie inférieure (21) et le couvercle (22) peuvent être fixés l'un à l'autre de telle sorte, que les deux surfaces d'étanchéité (212, 222) sont en contact direct l'une avec l'autre, dans lequel au moins une première rainure d'étanchéité (213) est prévue dans les surfaces d'étanchéité (212, 222) pour recevoir un premier élément d'étanchéité (10), et dans lequel au moins une deuxième rainure d'étanchéité (29; 29'; 214) est prévue pour recevoir un deuxième élément d'étanchéité (11; 12), dans lequel la première rainure d'étanchéité (213) et la deuxième rainure d'étanchéité (29; 29'; 214) sont connectées par une région de connexion (30), et un élément de précontrainte élastique (71) est prévu dans la région de connexion (30), qui exerce une précontrainte sur l'un des deux éléments d'étanchéité (10,11,12), **caractérisé en ce que** l'élément de précontrainte (71) est conçu comme un ressort (71).

2. Une pompe selon la revendication 1, dans laquelle un premier élément d'étanchéité (10) est déposé dans la première rainure d'étanchéité (213) et un deuxième élément d'étanchéité (11; 12) est déposé dans la deuxième rainure d'étanchéité (29; 29', 214).

3. Une pompe selon l'une des revendications précédentes, dans laquelle un évidement (60; 70) est prévu dans la région de connexion (30) pour recevoir l'élément de précontrainte (71).

4. Une pompe selon l'une des revendications précédentes, dans laquelle l'élément de précontrainte (71) s'étend parallèlement au premier élément d'étanchéité (10) ou parallèlement au deuxième élément d'étanchéité (11; 12).

5. Une pompe selon l'une des revendications précédentes, dans laquelle la première rainure d'étanchéité (213) ou la deuxième rainure d'étanchéité (214) est configurée pour recevoir un élément d'étanchéité en forme de ficelle (10; 12).

6. Une pompe selon l'une des revendications précédentes, dans laquelle la première rainure d'étanchéité (213) et la deuxième rainure d'étanchéité (214) sont configurées pour recevoir un élément d'étanchéité en forme de ficelle (10; 12).

7. Une pompe selon l'une des revendications 1 à 5, dans laquelle la première rainure d'étanchéité (213) ou la deuxième rainure d'étanchéité (29; 29') est configurée pour recevoir un élément d'étanchéité annulaire (11).

8. Une pompe selon l'une des revendications précédentes, dans laquelle la région de connexion (30) est configurée de telle sorte, que la première et la deuxième rainure d'étanchéité (10; 12) peuvent s'étendre essentiellement parallèlement dans la région de connexion (30).

9. Une pompe selon l'une des revendications précédentes, dans laquelle au moins la première rainure d'étanchéité (213) est prévue dans la partie inférieure (21) du boîtier (2).

10. Une pompe selon l'une des revendications précédentes, dans laquelle la première rainure d'étanchéité (213) est disposée contre la pression ambiante pour étancher l'intérieur de la pompe (1).

11. Une pompe selon l'une des revendications précédentes, dans laquelle la deuxième rainure d'étanchéité (29; 29') est prévue sur un couvercle latéral (9), qui ferme le boîtier (2) de la pompe (1) par rapport à une direction axiale (A).

12. Une pompe selon l'une des revendications précédentes, dans laquelle la deuxième rainure d'étanchéité (214) pour étancher est disposée dans la pompe entre deux chambres de pression (15, 17), dans lesquels des pressions différentes prévalent dans l'état de fonctionnement.

13. Une pompe selon l'une des revendications précédentes, dans laquelle les éléments d'étanchéité (10, 11, 12) sont faites d'un élastomère, en particulier d'un caoutchouc nitrile, particulièrement de caoutchouc butadiène- nitrile NBR.

14. Une pompe selon l'une des revendications précédentes, conçu comme une pompe centrifuge avec une pression nominale d'au moins 50 bars, de préférence d'au moins 100 bars.
